# DEMANDE DE BREVET EUROPEEN

(11) **EP 4 752 748 A2**
(43) Date de publication de la demande: **03.06.2026**
(21) Numéro de dépôt: 26171275.6
(22) Date de dépôt: 23.10.2020
(51) Int. Cl.: G06F 16/25

(54) **SYSTÈME INTEROPÉRABLE POUR LA CONVERSION RÉVERSIBLE DES DONNÉES GÉOGRAPHIQUES HÉTÉROGÈNES ENTRE LE DAO ET LE SIG**

(30) Priorité: 24.10.2019 FR 1911931
(62) Demande divisionnaire de: 20807084.7
(71) Demandeur: SAIPEM S.A, 92800 Puteaux (FR)
(72) Inventeur: PIERRE, Aurélia, 95490 VAUREAL (FR)
(74) Mandataire: Cabinet Beau de Loménie

(57) **Abrégé**

L'invention concerne un procédé mis en œuvre par ordinateur de traitement d'un fichier de dessin assisté par ordinateur (113a) configuré selon une charte graphique (121a), comprenant des données géographiques hétérogènes comportant une pluralité d'éléments représentatifs d'informations géométriques et de données caractérisant ces dites informations géométriques, le procédé comprenant a/ l'application, par un outil (561a), d'un ensemble de règles attributaires et spatiales à des éléments du fichier (113a), les règles comprenant des règles déduites de la charte graphique (121a), b/ l'application de règles de relations spatiales entre les éléments représentatifs d'informations géométriques, comprenant des jointures spatiales, des relations spatiales et des zones tampons, c/ la génération de listes d'erreurs présentant les résultats du contrôle effectué sur la base des règles attributaires et spatiales, d/ la génération d'un fichier de dessin assisté par ordinateur (512b) localisant les erreurs, e/ la génération d'un certificat (512a) lorsqu'aucune erreur n'est détectée, ledit certificat (512a) permettant de confirmer la qualité du fichier (113a) à être intégré dans une base de données géographique.

## Description

### Domaine Technique

L'invention concerne un système pour la conversion réversible de données géographiques hétérogènes, telles qu'incluses dans un dessin de carte ou de plan ou dans une base de données géographique, entre un format DAO (Dessin Assisté par Ordinateur) et un format SIG (Système d'Information Géographique) ou entre un premier format SIG et un deuxième format SIG. Le système gère et résout les problèmes d'interopérabilité de ces données.

L'invention est notamment un procédé applicable à tout domaine d'ingénierie car adaptable aux métiers spécifiques. L'invention est donc par essence multi-projets en s'adaptant aux contraintes d'entrées et de sorties via une mise à jour des instructions ou des configurations gérant les données. Les domaines où l'invention pourrait être utilisée sont non-exhaustifs et décrits comme suit : énergie ( p.ex. pétrole, gaz, électricité, solaire, hydrogène, hélium), réseaux (p.ex. télécoms, fibres optiques, antennes, câbles), transport (p.ex. aérien, ferré, pédestre, routier), mines, bâtiment, géotechnique, géologie, océanographie, environnement, bureau d'étude au sens large, collectivité territoriale, organismes d'états (p.ex. ministères).

### Technique antérieure

De manière connue dans l'état de la technique, il existe des solutions de traitement de données géo-référencées représentatives d'entités physiques respectives, p.ex. le traitement de cartes, plans ou dessins représentant la localisation de structures d'intérêt, tel que des réseaux de distribution de gaz, d'eau, d'électricité, des bâtiments, etc.

Comme décrit p.ex. dans FR3043221 (A1), la connaissance des réseaux de distribution offre aux responsables de l'exploitation une vision globale d'un réseau de distribution et un meilleur temps de réactivité en cas d'incident. Dans ce contexte, le géo-référencement est l'action de lier un objet (par exemple un câble d'alimentation électrique haute puissance) et ses données intrinsèques (comme son type, son année de mise en service, etc.) à des coordonnées géographiques permettant de le positionner dans l'espace. Le géo-référencement, par exemple d'un réseau nouvellement installé, est réalisé par un topographe qui relève sur le terrain avec des instruments de mesure de précision les éléments constituant ledit réseau et reporte ces données dans un plan dessiné à l'aide d'un logiciel de DAO. Il intègre dans ce dessin plusieurs types de données telles que : - des annotations textuelles contenant des informations métier ; - des entités ponctuelles ; - des entités en ligne brisée ; - des polygones et des entités surfaciques ; - des symboles dont la forme détermine la signification.

Dans ce contexte, FR3043221 (A1) propose un dispositif permettant de diminuer le temps nécessaire à la transformation d'un dessin topographique géo-référencé (mesuré sur le terrain) en un format ou une représentation SIG. Cependant, la solution proposée reste côté DAO, c'est-à-dire dans le logiciel DAO présenté. Il n'y a pas de traitement de la donnée ni de lien et/ ou de conversion vers un format SIG.

En outre, CN106802958 A divulgue la reconnaissance de graphisme des dessins de format DAO. Ce graphisme doit être conforme à une charte graphique qui est envoyé via l'encodage UTF-8 (abréviation de l'anglais Universal Character Set Transformation Format - 8 bits) dans un SIG, sans que le graphisme en question ne soit conservé dans le SIG. Cependant, la charte graphique se résume à affecter un type de logo ou graphisme ou symbologie à un type d'objet. Il n'y a pas de traitement de la donnée ni de réversibilité, ni de modèle de données.

### Exposé de l'invention

L'invention a pour but de palier tout ou partie des inconvénients précités, notamment de faciliter la conversion réversible de données géographiques hétérogènes, telles qu'incluses dans un dessin de carte ou de plan ou dans une base de données géographique, entre un format DAO (Dessin Assisté par Ordinateur) et un format SIG (Système d'Information Géographique) ou entre un premier format SIG et un deuxième format SIG. Par exemple, et de manière non limitative, l'invention a pour but de faciliter le transfert des données provenant de l'ingénierie et des méthodes vers une base de données géographique utilisée par un Système d'Information Géographique, et de réduire de façon significative la quantité d'homme heure pour réaliser ce transfert.

A cet effet, l'invention propose un système pour la conversion réversible de données géographiques hétérogènes, telles qu'incluses p.ex. dans un dessin de carte ou de plan ou p.ex. dans une base de données géographique, entre un format DAO et un format SIG ou entre un premier format SIG et un deuxième format SIG. Les données géographiques hétérogènes comprennent au moins une couche de données comportant une pluralité d'éléments représentatifs d'informations géométriques, et de données caractérisant ces dites informations géométriques. Le système comprend :
- un fichier DAO Master configuré selon une charte graphique DAO pour convertir des données géographiques hétérogènes dans une base de données SIG, et
- au moins une base de données SIG pour convertir des données géographiques hétérogènes dans une autre base de données SIG ou dans un format DAO Master,

Le système comprend en outre :
- un sous-système automatique de création d'un modèle de base de données géographique SIG (un modèle de données SIG) généré depuis un premier dictionnaire de données, et
- un ensemble de sous-systèmes configuré pour la conversion réversible de données géographiques hétérogènes utilisant le modèle de base de données géographique SIG et utilisant des fichiers configurables de cartographie de données (aussi connu comme : « data mapping »).

Par conséquent, grâce à un tel système, le temps de travail par fichier DAO pour récupérer et nettoyer la donnée une fois intégrée dans le SIG peut être réduit. Ce temps est à multiplier par le nombre de fichiers (en moyenne p.ex. 500 à 700 sur certains projets) et par l'itération inhérente à toute révision du fichier en question.

En outre, et ce pour toute entreprise de conversion réversible de données géographiques hétérogènes, la normalisation des procédés au sein des outils permet d'éviter de changer le système lors de l'itération du processus mais le système traite l'hétérogénéité ou les particularités de ces données, au sein des fichiers configurables de cartographie de données, indissociables des outils.

Le système nécessite de centraliser tous les plans 2D hétérogènes dans un seul fichier appelé DAO Master.

Le terme 'nécessiter' ne doit pas être vu comme une contrainte. Le DAO Master peut être réalisé de préférence conjointement avec un ou plusieurs plans d'implantation ('layout' en anglais), qu'il y ait p.ex. 1 ou 1000 fichiers hétérogènes. Ces plans d'implantation peuvent être centralisés. A terme, le DAO Master peut même être utilisé pour générer ces fichiers hétérogènes.

Il est de plus possible d'éviter de changer le système pour chaque projet grâce au modèle de base de données géographique SIG (« modèles de données SIG »), qui peut être considéré comme un standard SIG.

Le fait d'avoir un modèle de données SIG quel que soit le projet de la remontée d'information permet d'avoir une uniformisation.

Par ailleurs, la remontée d'informations DAO vers le SIG peut être sécurisée, de manière standard, avec une méthode réutilisable et adaptable à toute entreprise de conversion réversible de données géographiques hétérogènes - et ce, afin de pouvoir développer autour de cette centralisation des données dans le SIG, des outils et applications répondants aux besoins individuels des utilisateurs, p.ex. l'utilisateur principal du système et/ou des tiers, p.ex. des clients de l'utilisateur principal du système.

Le système est en outre réversible en transférant les données DAO vers le SIG mais aussi les données SIG vers le DAO, toujours en respectant les deux standards DAO et SIG.

La flexibilité du système permet d'intégrer toute modification dans les standards DAO et SIG.

De plus le système est rapide en régénérant en quelques heures (p.ex. 2h) le standard SIG représenté par un modèle de données SIG et tous les documents afférents, comme les dictionnaires de données.

Finalement, le système permet de lier les modèles de données SIG de n'importe quel tiers vers le modèle de données SIG de l'utilisateur principal et vice versa, afin de permettre aux données tierces d'être transvasées dans le modèle de données SIG du système et vice-versa.

Le système peut comprendre des fichiers configurables de cartographie de données, pour la conversion SIG-SIG, pour la conversion DAO-SIG, et pour la conversion SIG-DAO.

Les fichiers de cartographie de données sont des fichiers de configuration éditables et/ ou modifiables afin de configurer les modules pour être exécutés par les outils du système. Les fichiers configurables précisent les configurations spécifiques liées à l'hétérogénéité des données géographiques entrantes et sortantes des sous-systèmes permettant ainsi d'extraire les particularités en dehors des outils et rendant les sous-systèmes standardisés et universels.

Par conséquent, grâce aux fichiers configurables, le système est flexible, permettant à l'utilisateur principal d'adapter la conversion via l'activation ou la désactivation des modules et des sous-modules (qui généralement est prédéfinie par le système).

Par conséquent, pour toutes les raisons évoquées ci-dessus, le système peut se positionner en système créant, utilisant et exploitant l'intéropérabilité des données géographiques hétérogènes, lors de conversion réversible entre le DAO et le SIG.

Le premier dictionnaire de données au format SIG décrit la structure vide de la future base de données SIG (géodatabase), optionnellement au format du Langage de Modélisation Unifié, en anglais UML (Unified Modeling Language), p.ex. comprenant au moins un de:
- les classes abstraites, les classes concrètes, les classes d'entités, leur nom, leur alias et leur type ;
- les rasters (surfaces et images), les tables, leur nom, leur alias ;
- les champs, leur nom, leur alias, leur taille et leur type ;
- les domaines, leur nom, leur type et leurs codes, les sous-types, leur nom, leur type et leurs codes, les classes relationnelles et leur type ;
- les clés primaires, secondaires, étrangères, et une description de l'information attendue.

Le premier dictionnaire de données peut répondre à une convention de nommage et au standard UML de création de bases de données relationnelles.

Le système peut comprendre un premier sous-système composé d'une charte graphique permettant d'énoncer les règles, comme par exemple les géométries interdites, les normes et la convention de nommage des calques DAO et d'un modèle de fichier DAO Master pour la création et la configuration d'un fichier DAO Master compatible à être chargé dans un SIG, ce dit fichier DAO Master comprenant des données géographiques hétérogènes.

L'ensemble des sous-systèmes peut comprendre au moins : un deuxième sous-système pour la conversion DAO-SIG, un troisième sous-système pour la conversion SIG-DAO, et un quatrième sous-système pour la conversion SIG-SIG.

Les fichiers configurables de cartographie de données peuvent être lus par les outils FME sur la base d'une suite de modules composés de traitements informatiques, ces dits modules étant exécutables depuis les fichiers configurables de cartographie de données.

Le deuxième sous-système peut comprendre un fichier configurable de cartographie de données DAO-SIG, et un outil FME (de l'anglais Feature Manipulation Engine qui est un outil d'Extraction, de Transformation et de Chargement des données géographiques vectorielles, surfaciques, rasters et images, utilisé dans tous les secteurs d'activité de l'information géographique) configuré pour la conversion DAO-SIG, l'outil FME étant composé d'un ensemble de règles attributaires et spatiales.

Le deuxième sous-système peut être configuré pour appliquer des règles de relations spatiales sur la base des données des sous-systèmes de charte graphique (ou du premier sous-système de charte graphique) et pour appliquer des règles de création d'une base de données géographique SIG, telles que p.ex. des règles pour des jointures spatiales, des relations spatiales, des zones tampons et des règles concernant la récupération des informations. Le deuxième sous-système liste les erreurs dans un log de sortie.

Grâce au deuxième sous-système DAO-SIG, le système permet de faire dans un temps réduit, p.ex. en quelques minutes à une heure, un chargement d'un DAO Master dans une base de données géographique SIG, au lieu de plusieurs semaines pour un fichier DAO et environ 6 mois pour un lot de fichiers DAO.

Le deuxième sous-système DAO-SIG est conçu de telle sorte qu'il puisse être dynamique, évolutif, facile d'utilisation et gage de qualité :
- Dynamique, car il s'adapte au contenu du DAO Master grâce à la possibilité de n'appliquer que certains modules, diminuant ainsi le temps d'exécution de l'outil,
- Evolutif, car il est possible d'ajouter des modules complémentaires dans la structure de l'outil si de nouveaux cas conceptuels de stockage de la donnée sont rencontrés, sans besoin de redévelopper l'intégralité de l'outil,
- Facile d'utilisation, grâce à un contrôle externe réalisé depuis un fichier configurable, p.ex. un fichier Excel appelé fichier de cartographie de données,
- Gage de qualité car le cœur du système n'évolue pas malgré la possibilité d'absorber les évolutions des standards DAO et SIG. L'absorption des standards se situe au niveau du fichier configurable, p.ex. le fichier de cartographie de données.

Le troisième sous-système peut comprendre un fichier configurable de cartographie de données SIG-DAO, et un outil FME configuré pour la conversion SIG-DAO, l'outil FME étant composé d'un ensemble de règles attributaires et spatiales.

Le troisième sous-système comprend des modules activables par le fichier de cartographies de données pour appliquer des règles de relations spatiales sur la base des données des sous-systèmes de charte graphique (ou du premier sous-système de charte graphique) et pour appliquer des règles de création d'un fichier DAO Master, telles que des règles pour des jointures spatiales, des relations spatiales, des zones tampons et des règles concernant la récupération des informations. Le troisième sous-système liste les erreurs dans un log de sortie.

Grâce au troisième sous-système SIG-DAO, le système permet de faire dans un temps réduit, p.ex. en quelques minutes, le transfert des données d'une base de données géographique SIG vers un DAO Master, au lieu de p.ex. environ trois semaines de mise au format et des pertes de données non souhaitées.

Le troisième sous-système SIG-DAO est de préférence développé de telle sorte qu'il puisse être dynamique par l'emploi de modules et de sous-modules, évolutifs, faciles d'utilisation et gages de qualité :
- Dynamique, car il s'adapte au contenu du DAO Master grâce à la possibilité de n'appliquer que certains modules, diminuant ainsi le temps d'exécution de l'outil,
- Evolutif, car il est possible d'ajouter des modules complémentaires dans la structure de l'outil si de nouveaux cas conceptuels de stockage de la donnée sont rencontrés, sans besoin de redévelopper l'intégralité de l'outil,
- Facile d'utilisation, grâce à un contrôle externe réalisé depuis un fichier configurable, p.ex. un fichier Excel appelé fichier de cartographie de données,
- Gage de qualité car le cœur du système n'évolue pas malgré la possibilité d'absorber les évolutions des standards DAO et SIG. L'absorption des standards, se situe au niveau du fichier configurable, p.ex. le fichier de cartographie de données.

Le quatrième sous-système peut comprendre un premier sous-système configuré pour la conversion SIG-SIG d'un premier format SIG interne (c'est-à-dire compris ou utilisé par le système) vers un deuxième format SIG externe (c'est-à-dire externe au et/ou non utilisé par le système), et un deuxième sous-système configuré pour la conversion SIG-SIG du deuxième format SIG externe au premier format SIG interne si besoin vers le DAO Master.

Le quatrième sous-système, notamment chacun du premier et deuxième sous-système, peut comprendre un fichier configurable de cartographie de données SIG-SIG, et un outil Python configuré pour la conversion SIG-SIG, l'outil Python étant composé d'un ensemble de règles attributaires et de gestion de données.

Le quatrième sous-système SIG-SIG peut être configuré pour permettre la cartographie entre deux bases de données géographique SIG, ou entre deux modèles de données SIG. Par ailleurs, le quatrième sous-système SIG-SIG peut s'exécuter par un outil en langage Python qui lit des instructions dans le fichier configurable, p.ex. un fichier Excel de cartographie de données.

Grâce au quatrième sous-système SIG-SIG, le système permet de faire dans un temps réduit, p.ex. en quelques minutes à une heure, au lieu d'environ trois semaines, le chargement des données d'une base de données géographique SIG d'un tiers vers la base de données géographique SIG de l'utilisateur principal du système, ou à l'inverse, de la base de données géographique SIG de l'utilisateur principal vers une base de données géographique d'un tiers. Ainsi, cela permet de transvaser les données du tiers vers la base de données géographique de l'utilisateur principal ou inversement puis ensuite vers le DAO Master avec le troisième sous-système SIG-DAO. Le quatrième sous-système liste les erreurs dans un log de sortie.

Le système peut comprendre en outre un cinquième sous-système de contrôle de qualité et de respect des règles attributaires et géométriques du DAO Master, notamment avant le deuxième sous-système de conversion DAO vers le format SIG.

Le cinquième sous-système est composé en entrée:
- du fichier DAO Master,
- du fichier de configuration des tests à remplir manuellement pour effectuer le contrôle qualité, utilisant un modèle standardisé de fichier de configuration des tests, et
- d'un outil FME contenant des instructions répondant à un ensemble de règles attributaires et spatiales, configuré pour contrôler dans le fichier DAO Master la qualité des éléments représentatifs d'informations géométriques et les données caractérisant ces dites informations,
et en sortie :
- de listes d'erreur présentant les résultats à chacun des tests exécutés, et d'un
- DAO localisant les erreurs à corriger, et
- d'un certificat si les tests sont conformes.

Le cinquième sous-système, notamment l'outil FME, peut être configuré pour contrôler dans le fichier DAO Master la qualité des éléments représentatifs d'informations géométriques et les données caractérisant ces dites informations, telles que p.ex.: la conformité du fichier (p.ex. avec un fichier de modèle DAO), conformité de l'objet, et/ou la conformité des règles particulières.

Notamment, des exemples pour les éléments représentatifs d'informations géométriques et des données caractérisant ces dites informations comprennent : le type de géométrie par calque, les géométries et formats interdits, le contenu des blocs DAO, le respect de la convention de nommage des calques et des géométries et des blocs DAO, et la présence des attributs obligatoires, tels que l'identifiant unique de chaque géométrie, avant conversion et génération de certificat pour entrer dans le sous-système de conversion DAO vers le format SIG.

Le cinquième sous-système peut lister les erreurs dans deux fichiers de sortie, à savoir le DAO des erreurs et la liste d'erreurs par leur type.

Le cinquième sous-système peut être de telle sorte qu'il puisse être dynamique, évolutif, facile d'utilisation et gage de qualité :
- Dynamique, car il s'adapte au contenu du DAO Master grâce à la possibilité de n'appliquer que certains modules, diminuant ainsi le temps d'exécution de l'outil,
- Evolutif, car il est possible d'ajouter des modules complémentaires dans la structure de l'outil si de nouveaux cas conceptuels de test ou de contrôle qualité de la donnée sont rencontrés, sans besoin de redévelopper l'intégralité de l'outil,
- Facile d'utilisation, grâce à un contrôle externe réalisé depuis un fichier configurable, p.ex. un Excel appelé « Fichier de Contrôle Qualité », grâce aux deux fichiers de sortie, le premier listant la liste des résultats aux tests et le second la localisation des erreurs à corriger.
- Gage de qualité car le cœur du système n'évolue pas malgré la possibilité d'absorber les évolutions des standards DAO et SIG. L'absorption des standards se situera au niveau du fichier configurable, p.ex. le « Fichier de Contrôle Qualité », le certificat de conformité obtenu permettant de confirmer la qualité du DAO Master à être intégré dans le SIG.

Le format DAO est un fichier DWG, et le format SIG peut être un fichier GDB (GeoDataBase).

Les caractéristiques et avantages de l'invention apparaitront à la lecture de la description qui va suivre, donnée uniquement à titre d'exemple non limitatif, et faite en référence aux dessins annexés.

### Brève description des dessins

[Fig. 1] La figure 1 est une vue schématique d'une architecture (ou logigramme) du système selon l'invention,
[Fig. 2] La figure 2 est une vue détaillée d'une première partie du système de figure 1,
[Fig. 3] La figure 3 est une vue détaillée d'une deuxième partie du système de figure 1,
[Fig. 4] La figure 4 est une vue détaillée d'une troisième partie du système de figure 1, et
[Fig. 5] La figure 5 est une légende des éléments des figures 1 à 4.

### Description des modes de réalisation

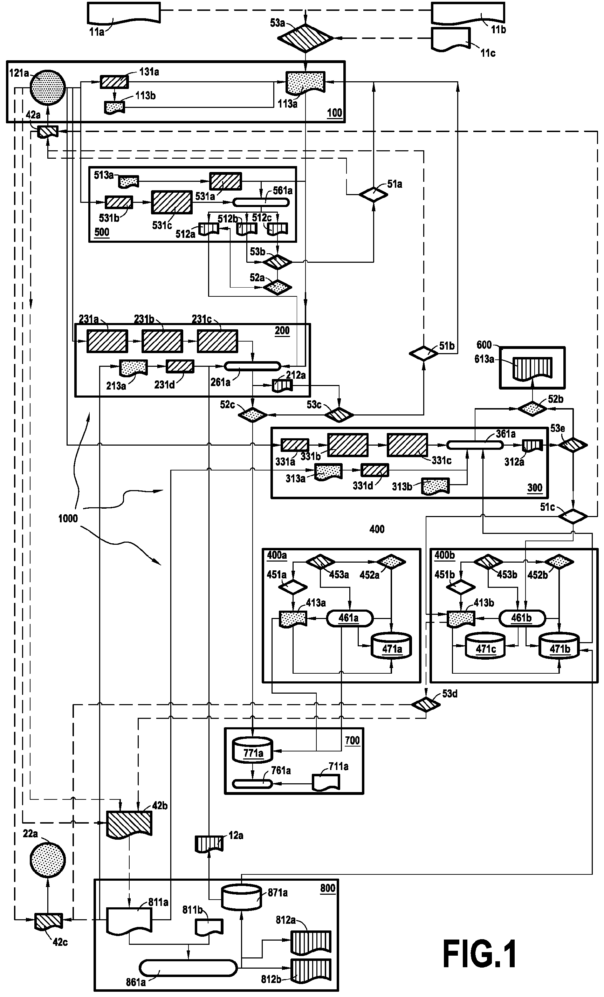

La figure 1 est une vue schématique d'une architecture (ou logigramme) d'un système selon l'invention. Le système est configuré pour la conversion réversible de données géographiques hétérogènes, telles qu'incluses p.ex. dans un dessin de carte ou de plan ou p.ex. dans une base de données géographique, entre un format DAO (Dessin Assisté par Ordinateur) et un format SIG (Système d'Information Géographique) ou entre un premier format SIG et un deuxième format SIG.

Les données géographiques hétérogènes comprennent au moins une couche de données comportant une pluralité d'éléments représentatifs d'informations géométriques, et de données caractérisant ces dites informations géométriques. Le système comprend huit sous-systèmes:
- un premier sous-système 100, qui comprend un fichier DAO Master 113a configuré selon une charte graphique DAO 121a pour mettre à disposition des données géographiques hétérogènes 11a, 11b, 11c compatibles avec un format SIG (notamment la base de données géographique 771a),
- un deuxième sous-système 200 configuré pour la conversion DAO-SIG,
- un troisième sous-système 300 configuré pour la conversion 'inverse' SIG-DAO,
- un quatrième sous-système 400 configuré pour la conversion SIG-SIG, notamment avec un premier sous-système 400a configuré pour une correspondance entre deux modèles de base de données SIG, p.ex. interne vs. externe, et un deuxième sous-système 400b configuré pour une correspondance entre deux modèles de base de données SIG, p.ex. externe vs. interne et si besoin vers le DAO Master,
- un cinquième sous-système 500 qui comprend un outil de contrôle qualité du DAO Master,
- un sixième sous-système 600 qui est le DAO Master rempli des géométries et des données en provenance d'une base de données géographique 471b,
- un septième sous-système 700 qui contient la base de données géographique recevant les données du DAO Master 113a,
- un huitième sous-système 800 de création automatique d'un modèle de base de données géographique SIG 871a générée depuis un premier dictionnaire 811a de données au format SIG.

Dans la fig. 1 les sous-systèmes de conversion 200, 300, 400 sont aussi indiqués comme un ensemble 1000.

Les autres éléments montrés dans les figures et décrits ci-dessous constituent des caractéristiques optionnelles et donc seulement une réalisation avantageuse du système. Notamment le système peut comprendre seulement quelques-uns de ces éléments.

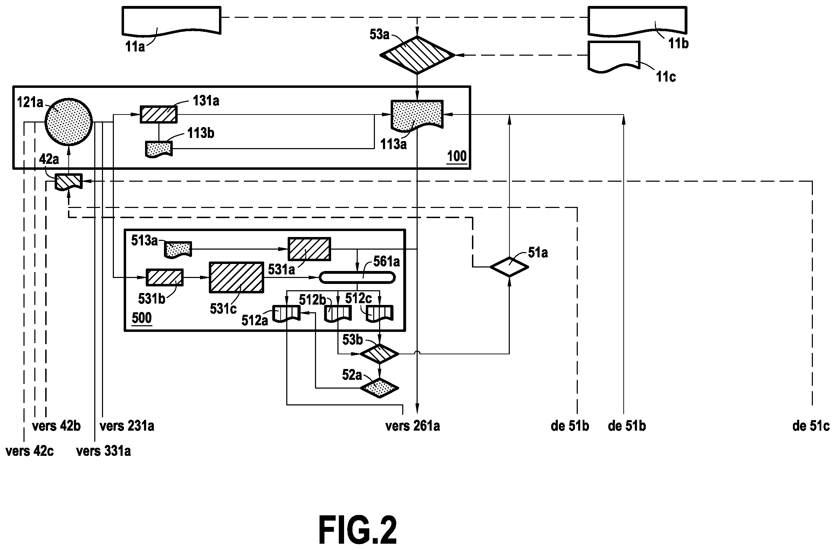

La figure 2 est une vue détaillée d'une première partie du système de figure 1. Cette première partie comprend p.ex. des éléments pour la centralisation des plan DAO, des éléments pour la fabrication du DAO Master (fichier DAO normalisé et conforme aux règles SIG répondant à une charte graphique), et des éléments pour le contrôle de qualité du DAO Master.

Les éléments pour la centralisation des plans DAO comprennent p.ex. une liste 11a de p.ex. des positions, azimut, angle d'inclinaison entre équipements étiquetés, pour différents instants « t » (c'est-à-dire p.ex. une pluralité d'éléments représentatifs d'informations géométriques) et/ou une liste 11b p.ex. des équipements nommés de manière unique (étiquetés, c'est-à-dire p.ex. des données caractérisant ces dites informations géométriques) et/ou un ou plusieurs fichiers 11c d'extension telle que DWG. Les listes 11a ou 11b et les fichiers 11c sont récupérés par un être humain selon l'élément d'action 53a configuré pour la centralisation d'informations dans un plan DAO Master avec de la géométrie et des données.

Les éléments pour la fabrication du DAO Master (fichier DAO normalisé et conforme aux règles SIG répondant à une charte graphique) forment un premier sous-système 100 selon l'invention. Ils comprennent p.ex. une charte graphique 121a pour créer un plan géographique DAO compatible avec un SIG. Un jeu 131a de règles à respecter est déduit de la charte graphique 121a. Un modèle de DAO Master 113b est créé sur la base du jeu de règles 131a. Un DAO Master 113a est généré sur la base de l'élément d'action 53a en appliquant le jeu de règles 131a et en utilisant le modèle 113b.

Si une modification de la charte graphique 121a est nécessaire, alors il convient d'aussi modifier la liste des abréviations 22a, via le fichier de modifications 42c et de modifier le dictionnaire de données 811a, via le fichier de modifications 42b.

Les éléments pour le contrôle de qualité du DAO Master forment un cinquième sous-système 500 selon l'invention. Ils comprennent p.ex. le DAO Master 113a à corriger, un fichier de contrôle de qualité 513a qui peut activer des modules et sous-modules 531a qui sont consommés en parallèle du flot de données du DAO Master 113a par un outil FME 561a configuré pour le test de qualité. Des règles 531b à respecter déduits de la charte graphique 121a sont ajoutés à des règles 531c de contrôle de qualité (p.ex. géométrie interdite, blocks, calques, attributs obligatoires, type de géométrie par couche, etc.). Les règles 531c sont respectées par l'outil FME 561a pour générer un certificat 512a, s'il n'y a pas d'erreurs. Dans le cas où il y a des erreurs, l'outil FME 561a génère un plan DAO 512b illustrant ces dites erreurs et un registre d'erreurs 512c. Donc, en cas d'erreur il y a 2 sorties de ce sous-système : le registre d'erreurs 512c, et le plan DAO localisant les erreurs 512b.

S'il y a des erreurs, ces deux sorties sont analysées dans une action 53b d'analyse du registre. Basé sur cette analyse le résultat négatif 51a est créé (matérialisé par le registre d'erreurs 512c et le plan DAO 512b), sur la base desquels le DAO Master 113a est corrigé. Dans un même temps, un fichier de modification 42a peut être rempli, afin de demander en conséquence à la charte graphique 121a d'éviter l'erreur à l'avenir. En outre, la mise à jour de la charte graphique 121a entraine la modification du dictionnaire de données 811a via le fichier de modifications 42b pour mettre à jour le modèle de base de données SIG 871a.

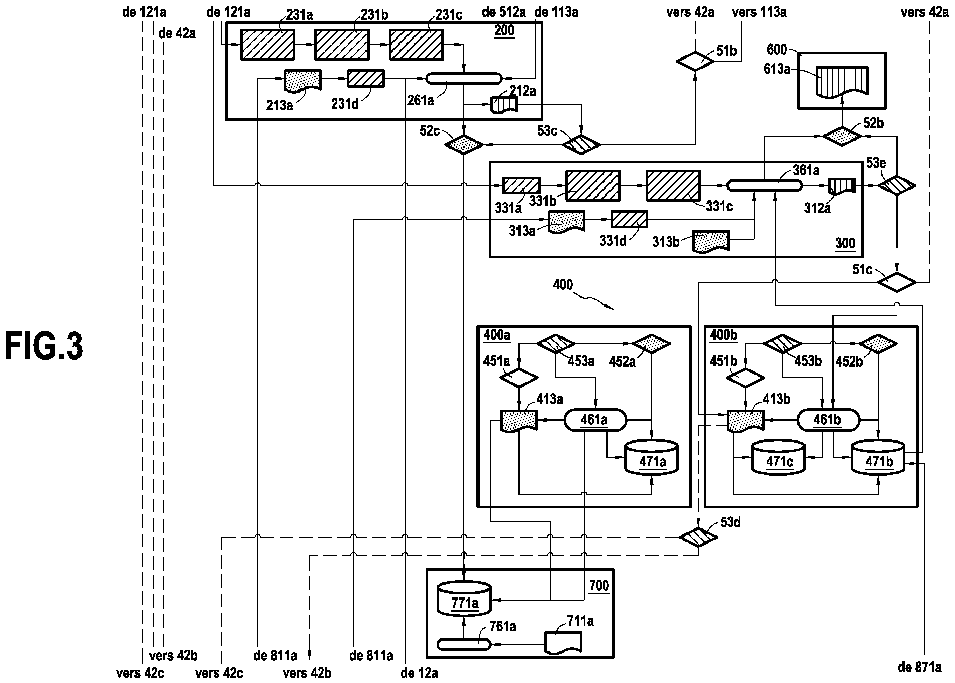

La liste 22a qui est mise à jour par la charte graphique 121a peut être aussi utilisée p.ex. par l'utilisateur pour faciliter la compréhension et le contrôle du système. Le résultat de l'action d'analyse 53b est aussi utilisé pour valider un résultat positif 52a qui confirme le certificat 512a et qui peut garantir la conformité du fichier DAO Master en entrée de l'opération de l'outil FME 261a (cf. fig. 3).

La figure 3 est une vue détaillée d'une deuxième partie du système de la figure 1. Cette deuxième partie comprend p.ex. notamment :
- un sous-système 200 comprenant des éléments pour le transfert du DAO Master vers une base de données géographique SIG répondant à un modèle de base de données géographique SIG,
- un sous-système 300 comprenant des éléments pour le transfert de données SIG vers le DAO Master (depuis une base de données géographique qui est ou non dans le modèle de base de données SIG normalisé),
- un sous-système 400 comprenant des éléments pour le transfert entre deux modèles de base de données SIG différents, notamment un sous-système 400a pour un transfert d'un modèle de base de données SIG interne vers un modèle de base de données SIG externe, et un sous-système 400b pour un transfert dans l'autre sens, c'est-à-dire d'un modèle de base de données SIG externe vers un modèle de base de données SIG interne, et
- un sous-système 600 comprenant des éléments pour sauvegarder le DAO Master de sortie, et
- un sous-système 700 comprenant des éléments pour le remplissage de la base de données géographique normalisée correspondant au modèle de base de données SIG.

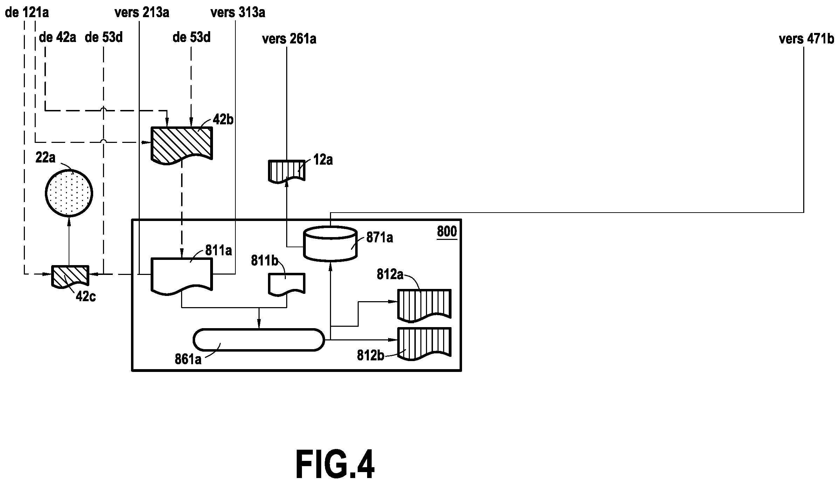

Les éléments pour le transfert du DAO Master vers une base de données géographique SIG répondant à un modèle de base de données SIG forment un deuxième sous-système 200 selon l'invention. Ils comprennent p.ex. un jeu de règles 231a à respecter qui est déduit de la charte graphique 121a. Les règles 231b de relation spatiale (p.ex. jointure spatiale, relation spatiale, buffer, etc.) et les règles 231c de recherche de données (p.ex. titre des couches de données, textes dans la carte, attributs de blocks, etc.) sont déduites du jeu 231a. Les règles 231c sont appliquées par un outil FME 261a configuré pour la conversion du DAO Master en base de données géographique SIG. En outre, un fichier configurable de cartographie de données 213a doit être rempli par un utilisateur utilisant des informations d'un dictionnaire 811a (cf. fig. 4). Le fichier 213a active des modules et sous-modules 231d pour être consommés par l'outil FME 261a, ensembles avec le DAO Master 113a et le certificat de conformité 512a, et avec le modèle de base de données SIG 871a exporté en fichier XML 12a.

S'il y a des erreurs, un résultat négatif 51b est créé et matérialisé par le registre d'erreurs 212a, puis une action 53c d'analyse du registre est commencée sur la base de laquelle le DAO Master 113a est corrigé. Dans un même temps, un fichier de modification 42a peut être rempli, afin de demander en conséquence à la charte graphique d'éviter l'erreur à l'avenir. Cette modification de la charte graphique peut nécessiter une modification du dictionnaire de données 811a via le fichier de modifications 42b.

Le résultat de l'action d'analyse 53c est aussi utilisé pour confirmer un résultat positif 52c du sous-système 200. Donc, s'il n'y a pas d'erreur, le résultat positif 52c est créé et une base de données géographique 771a est générée qui est remplie avec des géométries et des données du DAO Master. Un script Python 761a transforme la base de données géographique 771a qui est non géo-référencée dans la géodésie du projet, grâce au code EPSG 711a (EPSG est l'abréviation de European Petroleum Survey Group qui gère une liste de systèmes de coordonnées géographiques utilisés par de nombreux logiciels de SIG. Ces codes sont notamment utilisés dans les normes de l'OGC, Open Geospatial Consortium). La base de données géographique 771a, le script Python 761a et le code EPSG 711a forment des éléments, c'est-à-dire un septième sous-système 700, pour le remplissage de la base de données géographique normalisée correspondant au modèle de données SIG.

Les éléments pour le transfert de données SIG vers DAO (depuis une base de données géographique qui est ou non dans le modèle de base de données géographique SIG normalisé) forment un troisième sous-système 300 selon l'invention. Ils comprennent p.ex. un jeu de règles 331a à respecter qui est déduit de la charte graphique 121a. Le jeu 331a impose un jeu de règles 331b de relation spatiale (p.ex. jointure spatiale, relation spatiale, buffer, etc.). De même le jeu de règles 331b impose les règles 331c de recherche de données (p.ex. titre des couches de données, textes dans la carte, attributs de blocks, etc.). Ces dernières règles 331c sont appliquées par un outil FME inverse 361a configuré pour la conversion de la base de données géographique SIG en DAO Master. En outre, un fichier configurable 313a doit être rempli par un utilisateur utilisant des informations du dictionnaire 811a (cf. fig. 4). Le fichier 313a active des modules et sous-modules 331d pour être consommés par l'outil FME 361a, ensemble avec un fichier 313b comprenant un modèle de DAO Master, et la base de données géographique SIG 471b, p.ex. un fichier GDB. La base de données géographique 471b est pleine ou partiellement pleine de données et de géométries. Elle est créée à partir des géométries et des données contenues dans la base de données externe au système 471c et structurée en utilisant le modèle de base de données géographique interne au système 871a.

S'il y a des erreurs, une action 53e d'analyse du registre est commencée sur la base d'un registre d'erreurs 312a. Un résultat négatif 51c est alors créé pour relancer un script Python 461b. Ce script sert pour le transfert de données entre deux modèles de données SIG après correction du fichier de cartographie de données 413b. Dans un même temps, le fichier de modification 42a peut être rempli, afin de demander en conséquence à la charte graphique 121a d'éviter l'erreur à l'avenir.

Le résultat de l'action d'analyse 53e est aussi utilisé pour confirmer un résultat positif 52b du sous-système 300. Donc, s'il n'y a pas d'erreur, le résultat positif 52b est créé et le fichier DAO Master 613a est généré et rempli avec les géométries et les données de la base de données géographique 471b.

Les éléments pour le transfert entre deux modèles de données géographiques SIG différents forment un quatrième sous-système 400 selon l'invention. Notamment, le sous-système 400 peut comprendre un sous-système 400a pour un transfert d'un modèle de base de données SIG interne vers un modèle de base de données SIG externe, et un sous-système 400b pour un transfert d'un modèle de base de données SIG externe vers un modèle de base de données SIG interne.

Le sous-système 400a comprend donc p.ex. une base de données géographique 471a qui est initialement vide ou partiellement pleine (p.ex. une base de données externe, au sens 'qui n'est pas celui de l'utilisateur principal du système'). Elle est à compléter par les géométries et les données de la base de données 771a du septième sous-système 700. Le contenu (p.ex. un fichier GDB) de la base de données géographique 771a est consommé par un script Python 461a qui est configuré pour le transfert entre les deux modèles de données géographiques différents 771a et 471a. Les algorithmes du script Python sont utilisés pour remplir la base de données géographique 471a.

En outre, le script Python 461a consomme la base de données géographique 771a et un fichier configurable 413a. Ce fichier configurable 413a est un fichier de cartographie de données entre les deux modèles de base de données géographiques 771a, 471a, et utilisent donc ces deux bases de données.

Suite à l'exécution du script Python,461a, la console Python est analysée lors de l'action 453a. Si une erreur a été trouvée dans cette analyse (résultat négatif 451a) le fichier configurable 413a est corrigé. S'il n'y a pas d'erreur (résultat positif 452a), le remplissage de la deuxième base de données 471a par le script Python 461a est confirmé.

Par ailleurs, le sous-système 400b est configuré pour un transfert d'un modèle de base de données SIG externe vers un modèle de base de données SIG interne et si besoin vers le DAO Master 613a. Le sous-système 400b comprend donc p.ex. une première base de données géographique 471c, qui est remplie avec des géométries et des données d'un premier format, souvent externe, au sens 'qui n'est pas celui de l'utilisateur principal du système'. Les géométries et les données de la base de données géographique 471c sont à transvaser vers une deuxième base de données géographique 471b d'un deuxième format de base de données géographique SIG, dit interne, au sens 'qui est celui de l'utilisateur principal du système'. Le contenu (p.ex. un fichier GDB) de la base de données géographique 471c est consommé par un script Python 461b qui est configuré pour le transfert entre les deux modèles de données géographiques différents 471c et 471b. Les algorithmes du script Python sont utilisés pour remplir la deuxième base de données géographique 471b. En outre, le script Python 461b consomme la deuxième base de données géographique 471b et un fichier configurable 413b. Ce fichier configurable 413b est un fichier de cartographie de données entre les deux modèles de base de données géographiques 471c, 471b, et utilise donc ces deux bases de données. A cet effet, la deuxième base de données géographique 471b est initialement vide ou partiellement pleine. Elle est à compléter par les géométries et les données de la base de données 471c. Elle est créée par le modèle de base de données géographique interne 871a.

Suite à l'exécution du script Python 461b, la console Python est analysée lors de l'action 453b. Si une erreur a été trouvée dans cette analyse (résultat négatif 451b) le fichier configurable 413b est corrigé. S'il n'y a pas d'erreur (résultat positif 452b), le remplissage de la deuxième base de données 471b par le script Python 461b est confirmé.

Le contenu de la base de données 471b peut être consommé par l'outil FME 361a pour remplir le DAO Master 613a, si besoin.

Le fichier configurable 413b peut contenir des données jusqu'alors non connues ni intégrées. Dans ce cas, l'utilisateur du système via l'action 53d peut remplir un fichier 42b de modification du dictionnaire de données 811a (cf. fig. 4) et conjointement un fichier de modification 42c de modification de la liste des acronymes et des abréviations 22a (cf. fig. 4).

La figure 4 est une vue détaillée d'une troisième partie du système de figure 1.

Cette troisième partie comprend p.ex. notamment des éléments pour la création de la base de données géographique SIG (base de données géographique normalisée) et des fichiers de modification. Le fichier 42b peut être modifié suite à 121a ou suite à 42a ou 53d. Le fichier 42c peut être modifié suite à 121a ou suite à 53d ou suite à 811a.

Les éléments pour la création de la base de données géographique SIG forment un huitième sous-système 800. Ils comprennent p.ex. un premier dictionnaire 811a de données listant p.ex. au moins un de:
- les classes abstraites,
- les classes concrètes,
- les classes d'entités, leur nom, leur alias et leur type;
- les rasters (surfaces et images), leur nom, leur alias ;
- les tables, leur nom, leur alias ;
- les champs, leur nom, leur alias, leur taille et leur type;
- les domaines, leur nom, leur type et leurs codes ;
- les sous-types, leur nom, leur type et leurs codes ;
- les classes relationnelles et leur type ;
- les clés primaires, secondaires, étrangères, et une description de l'information attendue.

Le dictionnaire 811a est utilisé avec un fichier de paramètre 811b par un jeu de scripts Python (p.ex. 5 scripts) 861a configuré pour permettre via un procédé particulier de générer automatiquement un modèle de base de données géographique vide 871a, apte à fonctionner avec le logiciel de cartographie ArcGIS de la société ESRI ou équivalent et un deuxième dictionnaire de données 812a, et un troisième dictionnaire de données 812b.

Par exemple, le deuxième dictionnaire de données 812a est arrangé avec la liste des Champs (colonne 2) / Classes d'entités (colonne1). Ainsi, une même table/classe d'entité est répétée autant de fois qu'elle contient de champs. Le troisième dictionnaire de données 812b est arrangé avec le contenu attendu dans chaque champ (contenu stocké dans la cellule à l'intersection de chaque Champs (colonne) / Classes d'entités (ligne)). Il s'agit d'un tableau à double entrée.

Le modèle de base de données géographique 871a est de préférence en format de fichier GDB. Ce modèle 871a est exporté dans le fichier XML 12a puis consommé par l'outil FME 261a. En outre, le jeu de scripts Python 861a peut générer un deuxième dictionnaire de données 812a (p.ex. listant par classes d'entités tous les champs présents), et un troisième dictionnaire de données 812b (p.ex. représentant par classes d'entités et par champs le contenu attendu) en complément du premier dictionnaire de données 811a. En conséquence, le dictionnaire 811a s'il est modifié peut nécessiter une modification 42c de la liste des acronymes et abréviations 22a pour éviter la même erreur à l'avenir (cf. fig. 4).

Selon un autre exemple, les dictionnaires 811a, 812a et 812b sont conformes à la norme UML comme représentation logique de la base de données 871a. De son côté, cette base de données 871a est conforme à la norme UML comme représentation physique.

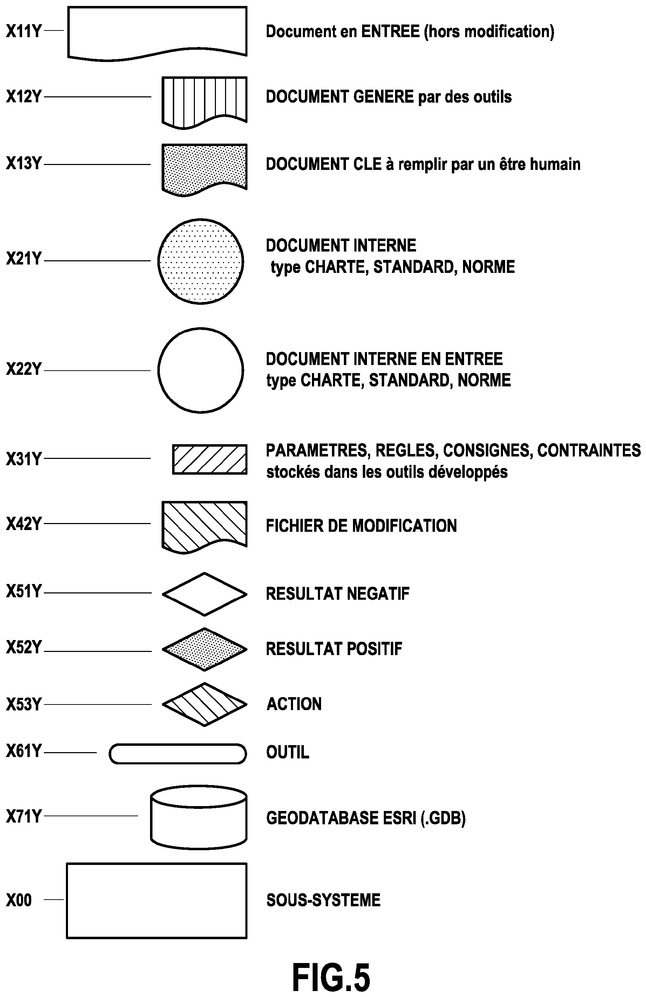

La figure 5 est une légende des éléments des figures 1 à 4. Elle décrit les fonctions des éléments utilisés, notamment montrés dans les figures détaillés 2 à 4. Les références numériques ont la même architecture suivante : le premier chiffre « X » est déterminé par le sous-système « X00 » qui comprend (si c'est le cas) l'élément respectif. Les deux chiffres suivants (p. ex. 11 pour les documents en ENTREE) indiquent le type d'élément. Le dernier chiffre « Y » est une numérotation par lettres (a, b, c, etc.) des éléments du même type dans le même sous-système.

## Revendications

1. Procédé mis en œuvre par ordinateur de traitement d'un fichier de dessin assisté par ordinateur (113a) configuré selon une charte graphique (121a), comprenant des données géographiques hétérogènes comportant une pluralité d'éléments représentatifs d'informations géométriques et de données caractérisant ces dites informations géométriques,
le procédé comprenant :
a/ l'application, par un outil (561a), d'un ensemble de règles attributaires et spatiales à des éléments du fichier (113a), les règles comprenant des règles déduites de la charte graphique (121a), lesdites règles comprenant au moins l'une parmi :
• un type de géométrie par calque du fichier de dessin assisté par ordinateur,
• des géométries et formats interdits,
• un contenu de blocs du fichier de dessin assisté par ordinateur,
• la présence d'attributs obligatoires associés aux éléments représentatifs d'informations géométriques,
b/ l'application de règles de relations spatiales entre les éléments représentatifs d'informations géométriques, comprenant des jointures spatiales, des relations spatiales et des zones tampons,
c/ la génération de listes d'erreurs présentant les résultats du contrôle effectué sur la base des règles attributaires et spatiales,
d/ la génération d'un fichier de dessin assisté par ordinateur (512b) localisant les erreurs,
e/ la génération d'un certificat (512a) lorsqu'aucune erreur n'est détectée, ledit certificat (512a) permettant de confirmer la qualité du fichier (113a) à être intégré dans une base de données géographique.

2. Procédé selon la revendication 1, dans lequel les attributs obligatoires comprennent un identifiant unique de chaque géométrie.

3. Procédé selon l'une des revendications précédentes, dans lequel l'application est réalisée au moyen de modules et de sous-modules (531a) pouvant être activés par un fichier de contrôle de qualité (513a).

4. Procédé selon l'une des revendications précédentes, dans lequel les règles comprennent des règles de contrôle de qualité.

5. Procédé selon l'une des revendications précédentes, dans lequel les listes d'erreurs et le fichier (512b) sont analysés afin de corriger le fichier de dessin assisté par ordinateur (113a).

6. Programme d'ordinateur comprenant des instructions qui, lorsqu'elles sont exécutées, mettent en œuvre le procédé selon l'une des revendications 1 à 5.

7. Système de traitement d'un fichier de dessin assisté par ordinateur (113a) configuré selon une charte graphique (121a), le système comprenant un outil (561a) configuré pour :
a/ appliquer un ensemble de règles attributaires et spatiales à des éléments du fichier de dessin assisté par ordinateur (113a), les règles comprenant des règles déduites de la charte graphique (121a), lesdites règles comprenant au moins l'une parmi :
• un type de géométrie par calque du fichier de dessin assisté par ordinateur,
• des géométries et formats interdits,
• un contenu de blocs du fichier de dessin assisté par ordinateur,
• la présence d'attributs obligatoires associés aux éléments représentatifs d'informations géométriques,
b/ appliquer des règles de relations spatiales entre les éléments représentatifs d'informations géométriques comprenant des jointures spatiales, des relations spatiales et des zones tampons ;
c/ générer des listes d'erreurs présentant les résultats du contrôle effectué sur la base des règles attributaires et spatiales ;
d/ générer un fichier de dessin assisté par ordinateur (512b) localisant les erreurs,
e/ générer un certificat (512a) lorsqu'aucune erreur n'est détectée, ledit certificat (512a) permettant de confirmer la qualité du fichier (113a) à être intégré dans une base de données géographique.
